Europäisches Patentamt

European Patent Office

Office européen des brevets

(11) Publication number: **0 126 316 B1**

(12) **EUROPEAN PATENT SPECIFICATION**

(45) Date of publication of patent specification: **20.05.92**  (51) Int. Cl.⁵: **H01S 3/03,** H01S 3/05, H01S 3/08, H01J 3/02

(21) Application number: **84104571.9**

(22) Date of filing: **24.04.84**

(54) **Laser system with interchangeable modules and method for interchanging such modules.**

(30) Priority: **19.05.83 US 496069**

(43) Date of publication of application:
**28.11.84 Bulletin 84/48**

(45) Publication of the grant of the patent:
**20.05.92 Bulletin 92/21**

(84) Designated Contracting States:
**AT BE CH DE FR GB IT LI LU NL SE**

(56) References cited:
**DE-A- 1 951 267**
**GB-A- 2 102 193**
**US-A- 3 484 718**

(73) Proprietor: **Javan, Ali**
**Laser Science Inc. 80 Prospect Street**
**Cambridge Massachusetts 02139(US)**

(72) Inventor: **Javan, Ali**
**Laser Science Inc. 80 Prospect Street**
**Cambridge Massachusetts 02139(US)**

(74) Representative: **Strasse, Joachim, Dipl.-Ing. et al**
**Eisenführ, Speiser & Strasse Balanstrasse 55**
**W-8000 München 90(DE)**

Rank Xerox (UK) Business Services
(3.08/2.19/2.0)

## Description

This invention relates to gas lasers comprising a sealed plasma chamber which is replacable together with high-voltage pulse circuitry. Such lasers are disclosed in EP-A-00 94 477 forming state of the art according to Article 54(3) EPC.

Description of the Prior Art:

In general, gas lasers are constructed with a plasma chamber containing a selected gas or mixture of gases, and a set of electrodes that produce a high-intensity current that excites the atoms or molecules to high energy states. A pair of optical mirrors, which may be within or external to the plasma chamber envelope, are provided to produce regeneration, hence causing laser oscillation. The mirrors, which form the resonator for the gas laser, must be aligned accurately to cause optical regeneration.

Such gas lasers have been used in many different configurations using various atomic and molecular gases. The output spectra that are available cover a wide electro-magnetic spectrum extending from the far infrared into the visible and near ultraviolet and have power capabilities from a few milliwatts to the megawatt region.

The practical applications of such lasers have been limited by a number of factors. Many kinds of lasers are effectively limited to laboratory usage because they cannot be operated in a sealed off condition without an auxiliary pumping system that either intermittently or continuously replenishes the gaseous medium. In molecular gas lasers, the composition of the gaseous medium gradually changes under operating conditions caused by molecular disassociation, giving rise to the requirement for the introduction of fresh gases into the envelope as used gases are removed. The life of a laser having a sealed envelope may also be limited by gaseous reactions or decomposition within the plasma chamber, the laser amplifying medium, that deteriorate the optical quality of the windows. For the most part, only inert gas lasers, such as helium-neon, and argon, krypton and other inert gas ion lasers have been practical for operation over an extended period of time as sealed-off units.

The expense associated with the use of many lasers is a critical factor in commercial applications. For example, there are helium-neon lasers which can be manufactured at relatively low cost and which are capable of operation under sealed conditions for a relatively long period of time. When the plasma chamber in such a laser finally fails, it may be more practical and economical to discard the entire unit rather than to replace the plasma chamber and realign the optical resonator to obtain oscillation.

In certain higher power and more expensive sealed inert gas lasers, the costs of the plasma chamber and the quxiliary equipment are high. When failure occurs in these more expensive laser systems, the plasma chamber is usually replaced, but that replacement requires skilled personnel because of the high voltages involved and the need for precise optical realignment. Nevertheless, such sealed inert-gas lasers are used commercially because the operating life is sufficiently long to justify the cost of replacement of the plasma chamber.

That is not true of molecular and most other gas lasers which have a more limited life under sealed operating conditions. For example, in lasers using carbon dioxide, excitation of the plasma causes dissociation of the gas molecules into carbon monoxide and oxygen. Such lasers are provided with a pumping station and the necessary auxiliary equipment to allow operation with a continuous gas flow. Recent developments in the use of catalysts to regenerate the carbon dioxide have lengthened the life of such sealed lasers, but most commercial units still require a flow of make-up gas to achieve acceptable operating life.

Similar and more serious problems arise with gas lasers using halides, for such gases are corrosive and surface reactions reduce the effectiveness of the optical lasers also be provided with continuing gas replenishment and, in addition, means must be provided for collecting the corrosive used gases.

The commercial application of many kinds of prior art lasers requiring replenishment of the used gas in the plasma chamber generally require a bulky gas handling system.

DE-A-1951267 discloses a laser system including a base in the form of a container having an opening which is covered by a lid carrying on its inner side the active portion of a laser which may be a pulsed gas laser, wherein the container has further openings on its sides for accomodating opticals parts such as mirrors.

A laser system according to the present invention is defined in claim 1. Claim 9 relates to a method of manufacturing such a laser.

In accordance with the present invention a gas laser is provided in which the plasma chamber and the associated high-voltage circuits can be quickly and easily replaced by relatively unskilled personnel. This feature makes it possible to use sealed plasma chambers in cases where the sealed chamber has a long shelf life, but gradual deterioration occurs when the plasma chamber is operated to obtain laser operation. in many applications such lasers are operated only intermittently.

With the limination of the gas handling system, it becomes possible to manufacture a compact, and in some important cases, portable and light weight lasers. This invention is addressed to gas lasers operating at low to medium power output and is not broadly applicable to very high energy lasers.

The sealed plasma chamber includes the usual high voltage electrodes and optical windows. To make chamber replacement possible without need for elaborate optical realignment, one section of a mating mechanical coupler is secured to the envelope or directly to one of the high voltage electrodes of the demountable plasma chamber and is positioned in a predetermined spatial and angular position with respect to the electrodes, optical windows and the optical axis of the plasma chamber. The positioning of the mechanical coupler with respect to the electrodes, the windows and the optical axis is identical for each of the interchangeable plasma chambers. A separate base on which the resonator mirrors are mounted, and which may carry the electrical elements making connection to the electrodes, the power supply and auxiliary equipment, is provided with the other section of the mating coupler fixed in a precise predetermined spatial and angular position with respect to a pair of mirrors mounted on the base. The position of this section of the mechanical coupler with respect to the mirrors is identical for each of the interchangeable bases. Each base and each plasma chamber is thus interchangeable with any other similarly aligned unit. When a plasma chamber fails, it is easily replaced by merely disonnecting the old chamber from the base and inserting coupler sections, one with respect to the electrodes and optical axis of the plasma chamber and the other with respect to the two mirrors, precisely locates the replacement chamber in position with sufficient accuracy to produce laser oscillations without elaborate adjustment. In important cases, the sealed plasma chamber containing an optimum laser gas mixture can be manufactured at low cost. This feature makes it possible to discard the used chamber and conveniently replace it with another one. More expensive chambers, such as in molecular lasers using rare isotopic species or those requiring elaborate electrode configuration, can be returned to the factory for reconditioning while the replacement chamber is in service.

This ability to replace a sealed plasma chamber, together with certain high voltage components, while retaining the mirrors, power supply and auxiliary equipment, makes it feasible to use lasers in many applications where cost restrictions or conditions of use now rule out their application. Advantage is taken here of the fact that plasma chambers of the types that have a relatively short life under actual operating conditions, may have a satisfactorily long shelf life in an inactive condition. Thus, even these so-called short-lived plasma chambers become feasible for use in many nonlaboratory applications.

The invention also permits different plasma chambers containing different gases but belonging to the same class of lasers to be used with a common base, thus providing greater versatility of application at minimum cost.

An important objective of the invention is to provide a compact portable source of short duration laser pulses of relatively high peak intensity. The necessary high speed electrical excitation of the laser plasma is provided by energy storage capacitors and a high speed electrical switch. The stored electrical energy in the capacitors is transferred at a high speed, i.e. a rapid current rise, to the laser plasma by the switch, which is in the form of a triggered or untriggered gas filled element. The energy efficient generation of such short duration high intensity output pulses by lasers using gases in which the molecules in the upper levels are short lived, requires very high speed energy transfer to the plasma chamber. If the lifetime is about a few nanoseconds, the rise time of the current excitation in the plasma must be less than a few nanoseconds.

In the embodiment described here, the small plasma chamber is integrated with the energy storage capacitors and the switch in a single small module to accomodate the needed high speed electrical excitation. In this module, the energy storage capacitors and the switch are positioned immediately adjacent the plasma chamber, permitting the connection to the electrodes of the plasma chamber to be made by at a low inductance. This arrangement results in the required high speed excitation for the production of high intensity short pulses.

This module is replaceable in the laser resonator so that in the event of failure of any component in the module, the laser can be quickly and easily returned to service, by relatively unskilled personnel, merely by replacing the entire module with another. If such a module were not provided, the plasma chamber and the associated circuits would have to be permanently installed as discrete closely packed components. Replacement of the plasma chamber or a high voltage component would be difficult and would require skilled personnel.

Candidates for such modular plasma construction include gas lasers with moderately high gain and short lived excited state molecules in which minimum inductance and high speed electrical excitation are requirements. Such lasers will operate in the transient gain switched mode when excited at high speed. A resonator of short length makes possible efficient energy extraction in the short duration of the transient gain. This small size of the plasma chamber is consistent with the requirement for an overall low inductance circuit. The short duration excitation pulse made possible by the modular plasma chamber construction has efficiently generated high peak intensities obtained from a small laser plasma at very low energy. The construction just described permits efficient gain switched operation in lasers using gases in which the upper-level lifetime of the molecules is very short.

In one embodiment of the invention in a pulsed gas laser, the plasma chamber together with other electrical components with inherently short lives, such as the energy deposition capacitors and the energy deposition switch, are integrated in a single disposable "plug-in" module. The entire module is positioned by a coupler at a predetermined position with respect to the axis of the plasma chamber. When the module is inserted into the resonator, a mate to the coupler locks the plasma chamber in a predetermined aligned position with respect to the resonator axis. The integrated module is arranged to provide sufficiently low inductance to produce plasma pulses having a duration of less than two nanoseconds.

In another embodiment of the invention relating to pulsed lasers, a first replaceable module, containing the high voltage energy storage capacitors, the high speed electrical energy deposition switch and associated circuitry, may be replaced independently of the plasma chamber, which comprises a second replaceable module. The plasma chamber module and the replacement of either or both of these units can be made without optical realignment.

In another embodiment, one mirror is incorporated into the replaceable plasma chamber and a second mirror is positioned on the resonator base.

Brief Description of the Drawings

Figure 1    is a diagrammatic plan view of a laser system incorporating the invention;

Figure 2    is a sectional view along line 2-2 of Figure 1;

Figure 3    is a longitudinal sectional view along line 3-3 of Figure 1;

Figure 4    is a diagrammatic top view of a replaceable module showing the position of the high voltage components; and

Figure 5    is a side view of the plasma chamber showing one of the electrode connectors and the corresponding chamber lock member.

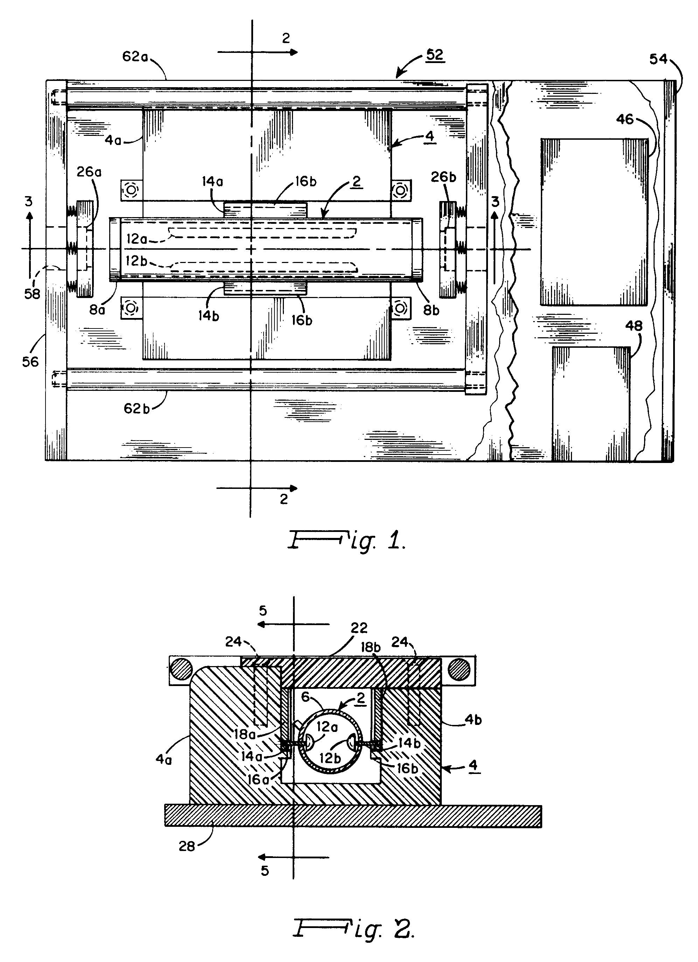

In the diagrammatic view of Figure 1, a plasma chamber, generally indicated at 2, is positioned between two sections 4a and 4b of a replaceable module, generally indicated at 4 (Figure 2). The plasma chamber 2 comprises an envelope having a tubular ceramic portion 6 sealed at its ends by two quartz windows 8a und 8b. Extending longitudinally within the plasma chamber 2 are a pair of oppositely disposed high-voltage electrodes 12a and 12b. A pair of electrode connector plates 14a and 14b are formed integrally with the electrodes 12a and 12b respectively and extend through opposing sides of the plasma chamber envelope.

The plasma chamber 2 is permanently sealed and filled with nitrogen gas.

The connector plates 14a and 14b serve both to support the plasma chamber 2 and to make connection to the electrodes 12a and 12b. For this reason and also to minimize inductance, the connector plates are of sturdy dimensions and preferably are at least one-third as long as the electrodes to which they are secured. These connector plates 14a and 14b respectively make face-to-face contact with two plasma chamber support plates 16a and 16b. These support plates, which are equal in length to the connector plates, provide the electrical connection to the plasma chamber and also form a precision mounting for the plasma chamber.

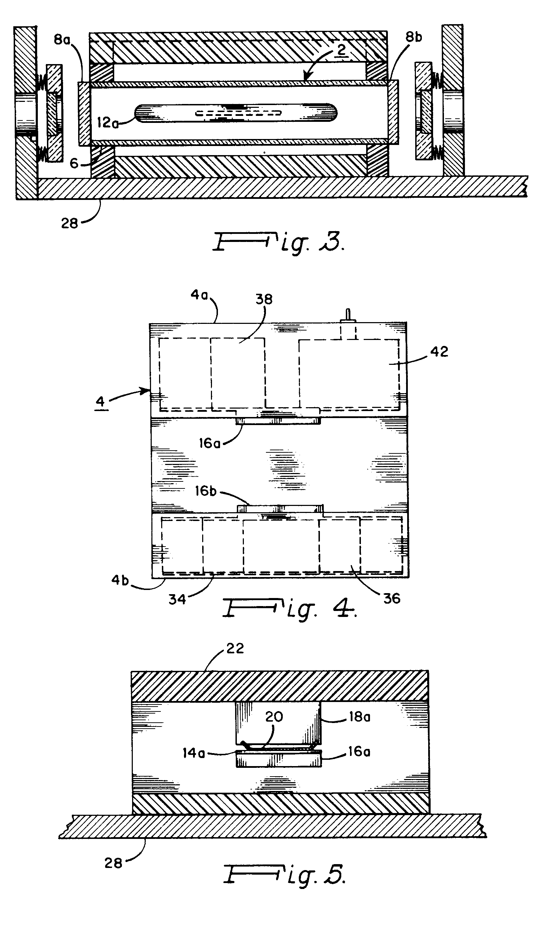

To maintain the lower surfaces of the connector plates 14a and 14b in firm engagement with the upper faces of the supports 16a and 16b, two plasma chamber lock plates 18a and 18b are arranged to exert a downward force on the two connector plates 14a and 14b to maintain them in firm pressure contact with the support plates 16a and 16b. Each of the chamber lock plates 18a and 18b carries on its bottom surface a leaf spring 20 that bears directly on the upper surface of the support plate immediately under it as best illustrated by Figure 5.

The upper ends of the chamber lock plates 18a and 18b are secured to a cover plate 22 so that when the screws 24 are tightened securing the cover plate to the module sections 4a and 4b, the plasma chamber electrode connectors 14a and 14b are respectively clamped into engagement with support plates 16a and 16b. The cover plate 22, which is formed of epoxy or other suitable insulating material, has embedded therein a charging resistor and capacitor (not shown) that make connection between the electrodes 16a and 16b through the lock plates 18a and 18b, which are formed of brass or other suitable material.

As shown in Figure 1, two resonator mirrors 26a and 26b are positioned at opposite ends of the plasma chamber 2 and function in the manner well known in the art.

The module 4 is secured by any suitable means to a base plate 28, formed of aluminum or other suitable material, and is precisely positioned in the horizontal plane with respect to the base plate by four locator pins that extend into corresponding bores molded into the bottom surface of the module 4.

The module 4 contains three high-voltage capacitors 34,36 and 38 and a gas switch 42, indicated diagrammatically in Figure 4, connected in a Blumlein circuit in the well known manner to produce, through the connections made by the support plates 16a and 16b, high voltage pulse discharges between the electrodes 12a and 12b.

These high voltage components are potted in heat conductive epoxy to produce the rigid block module 4. The bores are formed in the mold and so are precisely positioned from module-to-module with respect to the horizontal positions of the plasma chamber supports 16a and 16b.

A conventional high-voltage power supply 46 and timing and trigger circuits 48 are connected by suitable leads (not shown) to the module 4. The entire unit is housed in a case, generally indicated at 52, which includes a control panel 54 and a rear panel 56. The rear panel 56 has an opening 58 through which the laser light is emitted.

The two mirrors 26a and 26b are mounted, for example by the resonator tie rods 62a and 62b, in precise positions with respect to the locator pins and, therefore, with respect to the horizontal positions of the plasma chamber support plates 16a and 16b. Thus, if the module 4 is removed and another module substituted, the exact lateral dimensional relationship of the two resonator mirrors 26a and 26b is maintained with respect to the two support plates 16a and 16b.

The upper surfaces of the support plates 16a and 16b, which determine the positions of the electrodes 12a and 12b of the plasma chamber 2, are maintained at a precise height above the base plate 28 by the molding process when the module 4 is formed. There may be, however, from module to module, small variations in this dimension because of variations in the molding process. These variations are eliminated by machining the upper surface of each support plate 16a and 16b after the module is completed to maintain the same precise vertical position of each chamber with respect to the base plate 28.

With the arrangement described, either the module 4 or the plasma chamber 2 can be replaced quickly and easily by relatively unskilled personnel. In the event of failure of one of the high-voltage components, the module 4 is removed by lifting the cover plate 22, after removing the screws 24, and lifting the plasma chamber 2 from the support plates 16a and 16b. The high voltage power leads (not shown) are then disconnected from the module 4 and the module lifted off the locator pins. A replacement module is then positioned on the locator pins and connected to the high voltage supply. The plasma chamber is replaced on the support plates 16a and 16b and clamped in position by the cover plate 22. When power is restored, the laser will operate immediately without need for complex optical realignment.

Replacement of a defective plasma chamber is even simpler: It is only necessary to remove the cover plate 22, position a new laser plasma chamber on the support plates 16a and 16b and replace the cover plate. In this example, the plasma chamber itself comprises the second replaceable module, but if desired the plasma chamber may be incorporated in a separate structure or embedded in a solid matrix.

If both modules, that is, the plasma chamber and the associated high voltage circuitry, are to be replaced, the entire module 4 is replaced, without removing the cover plate 22, with a new one containing a new plasma chamber.

For certain applications, it may be preferable to mount the plasma chamber permanently in the module 4 and permit "plug-in" replacement only of the entire unit.

The two plasma chamber windows 8a and 8b are coated to minimize reflections at the operating frequency of the laser, as is well known. The two connector plates 14a and 14b will not need to fit snugly between the walls of the two module sections 4a and 4b because the non-reflective coated windows 8a and 8b will allow the laser to continue to oscillate despite small variations in the horizontal angular position of the plasma chamber 2.

Note that in this embodiment, the plasma chamber 2 is supported and its posttion controlled by the electrode connector plates 14a and 14b that are secured to the envelope adjacent the electrodes 12a and 12b. This arrangement permits greater flexibility than if the position of the plasma chamber were determined by mounts affixed to another part of the envelope. The critical element in maintaining the oscillation is the position of the electrodes 12a and 12b, which together with the resonator mirrors 26a and 26b define the optical axis of the chamber, not the position of the tubular part of the envelope. Thus, by forming each electrode connector plate integrally with the associated electrode, or otherwise attaching it so that dimensional integrity is maintained, the other dimensions of the plasma chamber envelope do not need to be so precisely controlled.

In general it is preferred to mount the resonator mirrors externally of the plasma chamber so that replacement of the plasma chamber does not require replacement of the mirrors. However, for some applications, it may be preferable to mount one of the mirrors within the envelope and the other externally as already described.

The plasma chamber 2 described herein may be a sealed nitrogen-filled chamber.

## Claims

1. A laser system of the type having a sealed plasma chamber (2), a power supply (46), high-voltage pulse generating circuitry (34, 36, 38, 42) and a base (28) carrying the power supply (46) and at least one mirror (26a, 26b) of an optical resonator, said system including a replacable module (4) comprising:

   (a) said plasma chamber (2), the plasma chamber comprising an envelope (6) having at least one optical window (8a, 8b), and first and second high-voltage electrodes (12a, 12b) disposed within the envelope (6),

   (b) said high-voltage pulse generating circuitry (34, 36, 38, 42), and

   (c) mechanical coupling means having a predetermined spatial relationship and orientation with respect to said electrodes (12a, 12b) and said window (8a, 8b), and being adapted to cooperate with mechanical coupling means on said base (28) having a predetermined spatial relationship and orientation with respect to said mirror (26a, 26b), to position said plasma chamber (2) with respect to said base (28) and mirror (26a, 26b) and allow said module (47) to be removed from said base (28) and replaced on said base (28) by a like module.

2. The system of Claim 1 wherein said high voltage pulse generating circuitry (34, 36, 38, 42) is potted in said module (4).

3. The system of claim 1 or 2 wherein:
   said module (4) includes plates (16a, 16b) for supporting said electrodes (12a, 12b) and said plasma chamber, said plates being arranged to be disposed a predetermined height above said base (28) when said module (4) is disposed thereon, thereby to maintain said plasma chamber (2) a predetermined height above said base (28) relative to said mirror (26a, 26b); and
   said base includes pins that engage corresponding bores in a surface of said module (4) to precisely position said module in a horizontal plane with respect to said base (28) and said mirror (26a, 26b);
   whereby when said module (4) is secured to said base (28) said plasma chamber (2) is positioned to permit laser oscillations, and said module (4) may be removed from said base (28) and replaced on said base (28) by a like module without the need for substantial optical realignment.

4. The system of Claim 2 or 3 including two of said optical windows (8a, 8b) in said envelope (6), and two of said mirrors (8a, 8b) mounted on said base (28).

5. The system of Claim 3 including
   a pair of connector plates (14a, 14b), each connected integrally with one of said electrodes (12a, 12b) and extending through opposite sides of said plasma chamber (2), and
   a pair of plasma chamber support plates (16a, 16b) in said module (4), each in face-to-face engagement with one of said connector plates (14a, 14b).

6. The system of Claim 5 wherein each of said connector plates (14a, 14b) is at least one-third as long as the electrode (12a, 12b) to which it is connected.

7. The system of Claim 5 or 6 wherein said module (4) further comprises
   first and second chamber locking plates (18a, 18b) electrically connected to said capacitors (34, 36, 38), and
   spring means (20) arranged to maintain pressurized contact between said first and second electrode connector plates (14a, 14b) and said first and second support plates (16a, 16b), respectively.

8. The system of Claim 3 wherein the module (4) comprises
   (a) first and second sections (4a, 4b) with facing spaced opposing walls,
   (b) said energy storage capacitors (34, 36, 38) disposed within said sections (4a, 4b) for storing energy from the power supply (46),
   (c) said high voltage switch (42) disposed within one of said sections (4a, 4b) for discharging said capacitors (34, 36, 38) in response to a control signal,
   (d) said sealed plasma chamber (2) positioned between said sections (4a, 4b) and immediately adjacent said opposing walls, and
   (e) said connector plates (14a, 14b) extending from said first and second walls and arranged to make low inductance contact between said capacitors (34, 36, 38) and said plasma chamber (2) to apply the energy discharged from said capacitors (34, 36, 38) to said plasma chamber (2) as a high voltage pulse.

9. A method of manufacturing a gas laser system which has a base (28) carrying a power supply (46), at least one mirror (26a, 26b) of an optical resonator, mounted on said base (28), high-voltage pulse circuitry (34, 36, 38, 42) and a sealed plasma chamber (2) comprising an envelope (6) in which are disposed a pair of high voltage electrodes (12a, 12b) and which has at least one optical window (8a, 8b), said method comprising:

    (a) providing a replaceable module (4) within which said plasma chamber (2) is disposed, said module including said high-voltage pulse-generating circuitry to produce a high voltage pulse for said chamber (2), and mechanical coupling means in a predetermined spatial relationship and orientation with respect to said optical window (8a, 8b) and said electrodes (12a, 12b), and

    (b) providing said base (28) including mechanical coupling means in predetermined fixed spatial relationship and orientation with respect to said mirror (26a, 26b),

    (c) said base (28) releasably receiving and being secured to said module (4), said mechanical coupling means of said module (4) and said mechanical coupling means of said base (28) being positioned so that when secured together said plasma chamber (2) and said mirror (26a, 26b) are in substantial optical alignment so that said laser system is capable of laser oscillations without need for substantial optical realignment.

10. The method of claim 9 further characterized by providing a plurality of said sealed plasma chambers (2) of the same class, each having a pair of high-voltage electrodes (12a, 12b) and at least one optical window (8a, 8b) and disposed within a said replaceable module (4), each containing high-voltage pulse generating circuitry (34, 36, 38, 42) to produce a high-voltage pulse for said plasma chamber (2), and each module (4) including said mechanical coupling means means.

11. The method of claim 9 wherein said high-voltage pulse generating circuitry comprises energy storage capacitors (34, 36, 38) and a switch (42) for discharging said capacitors (34, 36, 38).

12. The system of claim 1 wherein said high-voltage pulse generating circuitry comprises energy storage capacitors (34, 36, 38) and a switch (42) for discharging said capacitors (34, 36, 38).

**Revendications**

1. Système laser du type comportant une chambre à plasma étanche (2), une alimentation en énergie (46), un circuit générateur d'impulsions de haute tension (34, 36, 38, 42) et une semelle (28) portant l'alimentation en énergie (46) ainsi qu'au moins un miroir (26a, 26b) d'un résonateur optique, ledit système comportant un module remplaçable (4) qui comprend :

    (a) ladite chambre à plasma (2), cette chambre à plasma comportant une enveloppe (6) présentant au moins une fenêtre optique (8a, 8b) ainsi que des première et deuxième électrodes de haute tension (12a, 12b) disposées à l'intérieur de l'enveloppe (6),

    (b) ledit circuit générateur d'impulsions de haute tension (34, 36, 38, 42), et

    (c) des moyens d'accouplement mécanique présentant une relation spatiale et une orientation prédéterminées par rapport auxdites électrodes (12a, 12b) et à ladite fenêtre (8a, 8b) et étant adaptés à coopérer avec des moyens d'accouplement mécanique de ladite semelle (28) présentant une relation spatiale et une orientation prédéterminées par rapport audit miroir (26a, 26b), pour positionner ladite chambre à plasma (2) par rapport à ladite semelle (28) et audit miroir (26a, 26b) et pour permettre l'enlèvement dudit module (47) de ladite semelle (28) et son remplacement sur ladite semelle (28) par un module similaire.

2. Système selon la revendication 1, dans lequel ledit circuit générateur d'impulsions de haute tension (34, 36, 38, 42) est encapsulé dans ledit module (4).

3. Système selon la revendication 1 ou 2, dans lequel :

    ledit module (4) comprend des plaques (16a, 16b) destinées à porter lesdites électrodes (12a, 12b) et ladite chambre à plasma, lesdites plaques étant constituées pour être disposées à une hauteur prédéterminée au-dessus de ladite semelle (28) quand ledit module est disposé sur elle, pour maintenir ainsi ladite chambre à plasma (2) à une hauteur prédéterminée au-dessus de ladite semelle (28) par rapport audit miroir (26a, 26b), ladite semelle comportant en outre des broches qui s'engagent dans des alésages correspondants d'une surface dudit module (4) pour positionner de façon précise ledit module dans un plan horizontal par rapport à ladite semelle (28) et audit miroir (26a, 26b),

ce qui fait que quand ledit module (4) est fixé sur ladite semelle (28), ladite chambre à plasma (2) est positionnée pour permettre les oscillations du laser, ledit module (4) pouvant en outre être retiré de ladite semelle (28) et remplacé sur ladite semelle (28) par un module similaire sans qu'il soit besoin d'effectuer un rajustement optique important.

4. Système selon la revendication 2 ou 3, comportant dans ladite enveloppe (6) deux desdites fenêtres optiques et deux desdits miroirs (8a, 8b) montés sur ladite semelle (28).

5. Système selon la revendication 3, comportant :

une paire de plaques de connexion (14a, 14b) dont chacune est assemblée en une seule pièce avec l'une desdites électrodes (12a, 12b) et qui s'étendent à travers des côtés opposés de ladite chambre à plasma (2), et une paire de plaques (16a, 16b) portant la chambre à plasma dans ledit module (4), chacune d'elles étant en liaison face à face avec l'une desdites plaques de connexion (14a, 14b).

6. Système selon la revendication 5, dans lequel chacune desdites plaques de connexion (14a, 14b) a une longueur au moins égale au tiers de celle de l'électrode (12a, 12b) avec laquelle elle est assemblée.

7. Système selon la revendication 5 ou 6, dans lequel ledit module (4) comporte en outre une première et une deuxième plaques de verrouillage de chambre (18a, 18b) reliées électriquement à des condensateurs (34, 36, 38), et des moyens à ressort (20) disposés pour maintenir respectivement un contact sous pression entre lesdites première et deuxième plaques de connexion d'électrode (14a, 14b) et lesdites première et deuxième plaques porteuses (16a, 16b).

8. Système selon la revendication 3, dans lequel le module (4) comporte :

(a) une première et une deuxième parties (4a, 4b) avec des parois opposées espacées se faisant face,

(b) lesdits condensateurs d'accumulation d'énergie (34, 36, 38) disposés dans lesdites parties (4a, 4b) pour accumuler de l'énergie provenant de l'alimentation en énergie (46),

(c) un commutateur à haute tension (42) disposé à l'intérieur de l'une desdites parties (4a, 4b) pour décharger lesdits condensateurs (34, 36, 38) à la suite d'un signal de commande,

(d) ladite chambre à plasma étanche (2) positionnée entre lesdites parties (4a, 4b) et au voisinage immédiat desdites parties opposées, et

(e) lesdites plaques de connexion (14a, 14b) s'étendant à partir desdites première et deuxième parois et disposées pour être en contact à faible inductance entre lesdits condensateurs (34, 36, 38) et ladite chambre à plasma (2) pour appliquer l'énergie déchargée à partir desdits condensateurs (34, 36, 38) à ladite chambre à plasma (2) sous forme d'impulsions à haute rension.

9. Procédé de fabrication d'un système laser à gaz muni d'une semelle (28) portant une alimentation en puissance (46), au moins un miroir (26a, 26b) d'un résonateur optique monté sur ladite semelle (28), un circuit d'impulsions à haute tension (34, 36, 38, 42) et une chambre à plasma étanche (2) comportant une enveloppe (6) dans laquelle sont disposées deux électrodes à haute tension (12a, 12b) et qui presente au moins une fenêtre optique (8a, 8b), ledit procédé comportant :

(a) la disposition d'un module remplaçable (4) à l'intérieur duquel est disposée ladite chambre à plasma (2), ledit module comprenant ledit circuit générateur d'impulsions à haute tension pour produire des impulsions à haute tension destinées à ladite chambre (2), et des moyens d'accouplement mécanique en relation spatiale et avec une orientation prédéterminées par rapport à ladite fenêtre optique (8, 8a) et auxdites électrodes (12a, 12b) et

(b) la disposition de ladite semelle (28), comprenant des moyens d'accouplement mécanique, suivant une relation spatiale fixée et une orientation prédéterminées par rapport audit miroir (26a, 26b),

(c) ladite semelle (28) recevant ledit module (4) avec une fixation amovible, lesdits moyens d'accouplement mécanique dudit module (4) et lesdits moyens d'accouplement mécanique de ladite semelle (28) étant positionnés de manière que, lorsqu'ils sont liés entre eux, ladite chambre à plasma (2) et ledit miroir (26a, 26b) sont essentiellement en alignement optique pour que ledit système laser soit capable d'effectuer des oscillations laser sans qu'il soit besoin d'effectuer un rajustement optique important.

10. Procédé selon la revendication 9, caractérisé en outre par la disposition d'une pluralité desdites chambres à plasma étanches (2) de la même catégorie, chacune d'elles comportant une paire d'électrodes à haute tension (12a, 12b) ainsi qu'au moins une fenêtre optique (8a, 8b) et étant disposée dans undit module remplaçable (4), chacune d'elles comportant un circuit générateur d'impulsions de haute tension (34, 36, 38, 42) pour produire des impulsions de haute tension destinées à ladite chambre à plasma (2), chaque module (4) comportant lesdits moyens d'accouplement mécanique.

11. Procédé selon la revendication 9, dans lequel ledit circuit générateur d'impulsions de haute tension comporte des condensateurs d'accumulation d'énergie (34, 36, 38) et un commutateur (42) pour décharger lesdits condensateurs (34, 36, 38).

12. Système selon la revendication 1, dans lequel ledit circuit générateur d'impulsions de haute tension comporte des condensateurs d'accumulation d'énergie (34, 36, 38) et un commutateur (42) pour décharger lesdits condensateurs (34, 36, 38).

**Patentansprüche**

1. Lasersystem mit einer abgedichteten Plasmakammer (2), einer Stromversorgung (46), einer Hochspannungsimpulserzeugungseinrichtung (34, 36, 38, 42) und einer Grundplatte (28) zur Halterung der Stromversorgung (46) und mindestens eines Spiegels (26a, 26b) eines optischen Resonators;
   wobei das System ein austauschbares Modul (4) aufweist, das folgende Teile umfaßt:
   (a) die Plasmakammer (2), die eine Umhüllung (6) mit mindestens einem optischen Fenster (8a, 8b) und innerhalb der Umhüllung (6) angeordnete erste und zweite Hochspannungselektroden (12a, 12b) enthält,
   (b) die Hochspannungsimpulserzeugungseinrichtung (34, 36, 38, 42) und
   (c) mechanische Koppelmittel, die in einer vorbestimmten, räumlichen Position und Richtung zu den Elektroden (12a, 12b) und dem Fenster (8a, 8b) angeordnet sind und mit mechanischen Koppelmitteln an der Grundplatte (28) zusammenwirken, die wiederum eine vorbestimmte räumliche Position und Richtung gegenüber dem Spiegel (26a, 26b) hat, um die Plasmakammer (2) gegenüber der Grundplatte (28) und dem Spiegel (26a, 26b) auszurichten und ein Entfernen des Moduls (47) von der Grundplatte (28) zwecks Austauschs durch Aufsetzen eines anderen gleichen Moduls auf die Grundplatte (28) zu ermöglichen.

2. System nach Anspruch 1,
   dadurch gekennzeichnet, daß die Hochspannungsimpulserzeugungseinrichtung (34, 36, 38, 42) in dem Modul (4) durch Vergießen umschlossen ist.

3. System nach Anspruch 1 oder 2,
   dadurch gekennzeichnet, daß das Modul (4) Platten (16a, 16b) zur Halterung der Elektroden (12a, 12b) und der Plasmakammer enthält;
   daß die Platten zur Anbringung in einer vorbestimmten Höhe oberhalb der Grundplatte (28) ausgebildet sind, um eine bestimmte Höhenlage der Plasmakammer (2) über der Grundplatte (28) gegenüber dem Spiegel (26a, 26b) zu gewährleisten;
   daß die Grundplatte mit Stiften versehen ist, die in entsprechende Bohrungen in einer Oberfläche des Moduls (4) eingreifen, um eine genaue Positionierung des Moduls in einer horizontalen Ebene gegenüber der Grundplatte (28) und dem Spiegel (26a, 26b) zu gewährleisten;
   so daß dann, wenn das Modul (4) auf der Grundplatte (28) befestigt ist, die Plasmakammer so positioniert ist, daß sie Laserschwingungen erzeugen kann, und daß das Modul (4) von der Grundplatte (28) entfernt und durch ein anderes, gleiches Modul ersetzt wird, keine wesentliche optische Wieder-Ausrichtung erfolgen muß.

4. System nach Anspruch 2 oder 3,
   dadurch gekennzeichnet, daß die Umhüllung (6) zwei optische Fenster (8a, 8b) aufweist und daS auf der Grundplatte (28) zwei Spiegel (26a, 26b) angeordnet sind.

5. System nach Anspruch 3,
   gekennzeichnet durch zwei Kontaktplatten (14a, 14b), die je mit einer der Elektroden (12a, 12b) integral verbunden sind und sich durch einander gegenüberliegende Seiten der Plasmakammer (2) erstrecken, und zwei Plasmakammer-Halterungsplatten (16a, 16b) in dem Modul (4), von denen jede jeweils mit einer der Kontaktplatten (14a, 14b) flächig in Kontakt tritt.

6. System nach Anspruch 5,
dadurch gekennzeichnet, daß die Länge jeder der Kontaktplatten (14a, 14b) mindestens einem Drittel der Länge der Elektrode (12a, 12b) entspricht, mit der sie verbunden ist.

7. System nach Anspruch 5 oder 6,
dadurch gekennzeichnet, daß das Modul (4) außerdem erste und zweite Kammer-Verriegelungsplatten (18a, 18b) enthält, die elektrisch mit Kondensatoren (34, 36, 38) verbunden sind sowie Federmittel (20), die so angeordnet sind, daß sie einen Druck zwischen den ersten und zweiten Kontaktplatten (14a, 14b) und den ersten und zweiten Halterungsplatten (16a, 16b) aufrechterhalten.

8. System nach Anspruch 3,
dadurch gekennzeichnet, daß das Modul (4) folgende Teile umfaßt:
(a) erste und zweite Abschnitte (4a, 4b) mit einander im Abstand gegenüberliegenden Wänden,
(b) Energiespeicherkondensatoren (34, 36, 38), die innerhalb dieser Abschnitte (4a, 4b) zum Speichern von elektrischer Energie der Stromversorgung (46) angeordnet sind,
(c) einen Hochspannungsschalter (42), der innerhalb einer der beiden Abschnitte (4a, 4b) zum Entladen der Kondensatoren (34, 36, 38) aufgrund eines Steuersignals angeordnet ist,
(d) die abgedichtete Plasmakammer (2), die zwischen den Abschnitten (4a, 4b) direkt angrenzend an die einander gegenüberliegenden Wände angeordnet ist, und
(e) die Kontaktplatten (14a, 14b), die sich von den ersten und zweiten Wänden erstrecken und zur Kontaktgabe mit niedriger Induktivität zwischen den Kondensatoren (34, 36, 38) und der Plasmakammer (2) dienen, um die Entladungsenergie von den Kondensatoren (34, 36, 38) der Plasmakammer (2) als Hochspannungsimpuls zuzuführen.

9. Verfahren zur Herstellung eines Gaslasersystems mit einer Grundplatte (28), die eine Stromversorgung (46), mindestens einen Spiegel (26a, 26b) eines optischen Resonators, eine Hochspannungsimpulserzeugungseinrichtung (34, 36, 38, 42) und eine abgedichtete Plasmakammer (2) enthält, wobei die Plasmakammer (2) eine Umhüllung (6) mit zwei Hochspannungselektroden (12a, 12b) und mindestens einem optischen Fenster (8a, 8b) aufweist,
gekennzeichnet durch
(a) Bereitstellen eines austauschbaren Moduls (4), in dem eine Plasmakammer (2) angeordnet ist und das die Hochspannungsimpulserzeugungseinrichtung zur Erzeugung eines Hochspannungsimpulses für die Plasmakammer (2) und mechanische Koppelmittel in vorbestimmter Position und Lage gegenüber dem optischen Fenster (8a, 8b) sowie die Elektroden (12a, 12b) enthält, und
(b) Bereitstellen der Grundplatte (28) mit mechanischen Koppelmitteln in vorbestimmter Position und Lage gegenüber dem Spiegel (26a, 26b),
(c) wobei die Grundplatte austauschbar das Modul (4) aufnimmt und fixiert, die mechanischen Koppelmittel des Moduls (4) und die mechanischen Koppelmittel der Grundplatte (28) so positioniert sind, daß beim Aneinanderbefestigen die Plasmakammer (2) und der Spiegel (26a, 26b) sich in wesentlicher optischer Ausrichtung zueinander befinden, das Lasersystem in der Lage ist, Laserschwingungen ohne erneute optische Ausrichtung zu erzeugen.

10. Verfahren nach Anspruch 9,
dadurch gekennzeichnet, daß eine Mehrzahl von abgedichteten Plasmakammern (2) derselben Größe vorgesehen ist, von denen jede zwei Hochspannungselektroden (12a, 12b) sowie mindestens ein optisches Fenster (8a, 8b) aufweist und in dem austauschbaren Modul (4) angeordnet sind, und von denen jede eine Hochspannungsimpulserzeugungseinrichtung (34, 36, 38, 42) enthält, um einen Hochspannungsimpuls für die zugehörige Plasmakammer (2) zu erzeugen, und daß jedes Modul (4) die mechanischen Koppelmittel enthält.

11. Verfahren nach Anspruch 9,
dadurch gekennzeichnet, daß die Hochspannungsimpulserzeugungseinrichtung Energiespeicherkondensatoren (34, 36, 38) und einen Schalter (42) zum Entladen der Kondensatoren (34, 36, 38) enthält.

12. System nach Anspruch 1,
dadurch gekennzeichnet, daß die Hochspannungsimpulserzeugungseinrichtung Energiespeicherkondensatoren (34, 36, 38) und einen Schalter (42) zum Entladen der Kondensatoren (34, 36, 38) enthält.

Fig. 1.

Fig. 2.

Fig. 3.

Fig. 4.

Fig. 5.